# EUROPÄISCHE PATENTSCHRIFT

(11) **EP 2 927 095 B1**
(45) Veröffentlichungstag und Bekanntmachung des Hinweises auf die Patenterteilung: **07.12.2016**
(21) Anmeldenummer: 15000763.1
(22) Anmeldetag: 14.03.2015
(51) Int. Cl.: B62D 6/00

(54) **Verfahren und Vorrichtung zur Stabilisierung eines erfassten instabilen Fahrzustands eines Kraftfahrzeugs**
METHOD AND DEVICE FOR STABILISING A CAPTURED UNSTABLE STATUS OF A MOTOR VEHICLE
PROCÉDÉ ET DISPOSITIF DE STABILISATION D'UN ÉTAT DE CONDUITE INSTABLE DÉTECTÉ D'UN VÉHICULE AUTOMOBILE

(30) Priorität: 05.04.2014 DE 102014005011
(43) Veröffentlichungstag der Anmeldung: 07.10.2015
(73) Patentinhaber: AUDI AG, 85045 Ingolstadt (DE)
(72) Erfinder: Schmiedhofer, Klaus, DE - 85049 Ingolstadt (DE); Hoffmann, Markus, DE - 85057 Ingolstadt (DE)
(74) Vertreter: Herbst, Matthias Heinz

(56) Entgegenhaltungen:
- DE-A1- 10 141 425

## Beschreibung

Die Erfindung betrifft ein Verfahren zur Stabilisierung eines erfassten instabilen Fahrzustands eines Kraftfahrzeug.

In der DE 101 41 425 A1 ist ein Verfahren offenbart, bei dem fahrzustandsabhängig ein additives Zusatzmoment auf das Lenkrad gebracht wird, welches das Lenkrad automatisch in die zur Stabilisierung der Gierbewegung erforderliche Lenkradstellung bringt.

Aus der DE 103 54 662 A1 ist ein Verfahren zur Unterstützung des Fahrers eines Kraftfahrzeugs in fahrdynamischen Grenzsituationen bekannt, bei dem ein Moment auf das Lenkrad ausgeübt wird, so dass der Fahrer erkennen kann, in welche Richtung er lenken muss, um das Kraftfahrzeug wieder zu stabilisieren.

Aus der DE 10 2005 018 471 A1 sind ein Verfahren und eine Vorrichtung zur Stabilisierung eines Kraftfahrzeugs bekannt. Abhängig vom Vorliegen eines instabilen Fahrzustandes wird dabei ein fahrerunabhängiges Lenkradmoment aufgebracht. Dieses Drehmoment bewirkt, dass eine Drehung des Lenkrads in diejenige Richtung, die zu einer Abschwächung oder Behebung des instabilen Fahrzustands führt, leichtgängiger wird.

Der Nachteil dieser Verfahren ist, dass der Fahrer bei einem unter- oder übersteuernden Fahrzustand ebenfalls spürt, dass das Lenkrad leichtgängiger wird. In diesem Fall versucht das ESP z. B. durch Lenkeingriffe, Einzelradbremsungen und Reduzierung der Motorleistung das Kraftfahrzeug zu stabilisieren. Der Fahrer erhält aber nur über eine Leuchte in dem Kombiinstrument eine Rückmeldung, dass ein Eingriff stattfindet. Problematisch dabei ist, dass die meisten Fahrer, die ihr Kraftfahrzeug in der Nähe der Haftgrenze zwischen Rädern und Fahrbahn bewegen, dazu tendieren, durch Lenkeinschläge in die falsche Richtung eine weitere Destabilisierung des Fahrzeugs, sowohl über- als auch untersteuernd zu bewirken. Das bedeutet, die Reifen verlieren die Haftung auf der Fahrbahn, so dass die Gefahr besteht, dass der Fahrer die Kontrolle über das Kraftfahrzeug verliert.

Der Erfindung liegt die Aufgabe zugrunde, ein demgegenüber verbessertes Verfahren anzugeben, bei dem die Gefahr einer unkontrollierten Situation verringert ist.

Zur Lösung dieser Aufgabe ist bei einem Verfahren der eingangs genannten Art vorgesehen, dass eine Kraft mittels eines Aktors auf das Lenkrad aufgebracht wird, die eine Drehung des Lenkrads in die Richtung, die eine weitere Destabilisierung des Fahrzustands verursachen würde, erschwert.

Dadurch wird verhindert, dass der Fahrer durch eine Drehung des Lenkrads in die falsche Richtung eine weitere Destabilisierung des Kraftfahrzeugs verursacht. Zusätzlich erhält der Fahrer einen haptischen Hinweis, bei welcher Drehrichtung des Lenkrads eine Stabilisierung des Kraftfahrzeugs erfolgen würde.

Erfindungsgemäß wird das Lenkrad bei einer Drehung in die Drehrichtung, die eine weitere Destabilisierung des Fahrzustands des Kraftfahrzeugs bewirken würde, durch den Aktor blockiert.

Das Ziel dieses Verfahrensschritts ist, dem Fahrer durch Blockieren des Lenkrads haptisch zu signalisieren, dass er sein Kraftfahrzeug in der Nähe der Haftgrenze bewegt. Vor allem aber dient das Blockieren dazu, einen destabilisierenden Eingriff des Fahrers zu vermeiden.

Eine zweckmäßige Weiterbildung der Erfindung sieht vor, dass das Kraftfahrzeug eine Steuerungseinrichtung aufweist, die einen über- oder untersteuernden Fahrzustand erfasst und den Aktor entsprechend ansteuert. Durch diese Ansteuerung des Aktors wird erreicht, dass die Kraft, die auf das Lenkrad übertragen wird, eine Drehung in die falsche Richtung erschwert oder blockiert.

Eine vorteilhafte Ausgestaltung der Erfindung sieht vor, dass im Falle einer Lenkbewegung in die Richtung, die zu einer Stabilisierung des Fahrzustands des Kraftfahrzeugs führt, die Steuerungseinrichtung den Aktor so steuert, dass die auf das Lenkrad aufgebrachte Kraft reduziert wird oder entfällt. Dadurch bleibt das Lenkrad in die richtige Richtung frei drehbar. Zusätzlich ist es auch wieder in die zuvor blockierte Drehrichtung bewegbar.

Eine weitere zweckmäßige Weiterbildung der Erfindung sieht vor, dass zusätzlich zu der auf das Lenkrad aufgebrachten Kraft ein optisches und/oder akustisches und/oder haptisches Signal ausgegeben wird. Dies ist zweckmäßig, da dem Fahrer auf diese Weise mitgeteilt wird, dass ein Eingriff stattfindet. Fahrern, die nicht mit der erfindungsgemäßen Vorrichtung vertraut sind, kann auf diese Weise der Stabilisierungseingriff angezeigt werden.

Eine weitere vorteilhafte Ausgestaltung der Erfindung sieht vor, dass die Steuerungseinrichtung den Schwimmwinkel des Kraftfahrzeugs zur Erfassung des instabilen Fahrzustandes verwendet. Der Schwimmwinkel ist der Winkel zwischen der Längsachse des Kraftfahrzeugs und der Bewegungsrichtung des Schwerpunkts.

Eine weitere vorteilhafte Ausgestaltung der Erfindung sieht vor, dass der Steuerungseinrichtung die einen instabilen Fahrzustand betreffenden Informationen von einem elektronischen Stabilitätsprogramm (ESP) zugeführt werden. Informationen über den Fahrzustand des Kraftfahrzeugs werden ständig vom ESP überwacht und können bei Erfassung eines instabilen Fahrzustands an die Steuerungseinrichtung übermittelt werden.

Daneben betrifft die Erfindung eine Vorrichtung zur Stabilisierung eines Kraftfahrzeugs, umfassend ein Mittel zum Erfassen eines instabilen Fahrzustands.

Die erfindungsgemäße Vorrichtung umfasst wenigstens eine Steuerungseinrichtung, die dazu ausgebildet ist, bei einem erfassten instabilen Fahrzustand, mittels eines Aktors eine Kraft auf das Lenkrad aufzubringen, welche eine Drehung des Lenkrads in die Richtung, die eine weitere Destabilisierung des Kraftfahrzeugs bewirken würde, erschwert. Dadurch wird vermieden, dass der Fahrer einen destabilisierenden Eingriff vornehmen kann.

Eine zweckmäßige Weiterbildung der Erfindung sieht vor, dass die Steuerungseinrichtung mit einem ESP verbunden ist und dass einen instabilen Fahrzustand betreffende Informationen der Steuerungseinheit von dem ESP zuführbar sind.

Weitere Vorteile und Einzelheiten der Erfindung werden anhand eines Ausführungsbeispiels unter Bezugnahme auf die Zeichnungen beschrieben. Die Zeichnungen sind schematische Darstellungen und zeigen:
- Fig. 1: ein Ausführungsbeispiel eines Kraftfahrzeugs mit einer erfindungsgemäßen Vorrichtung; und
- Fig. 2: ein Flussdiagramm des erfindungsgemäßen Verfahrens.

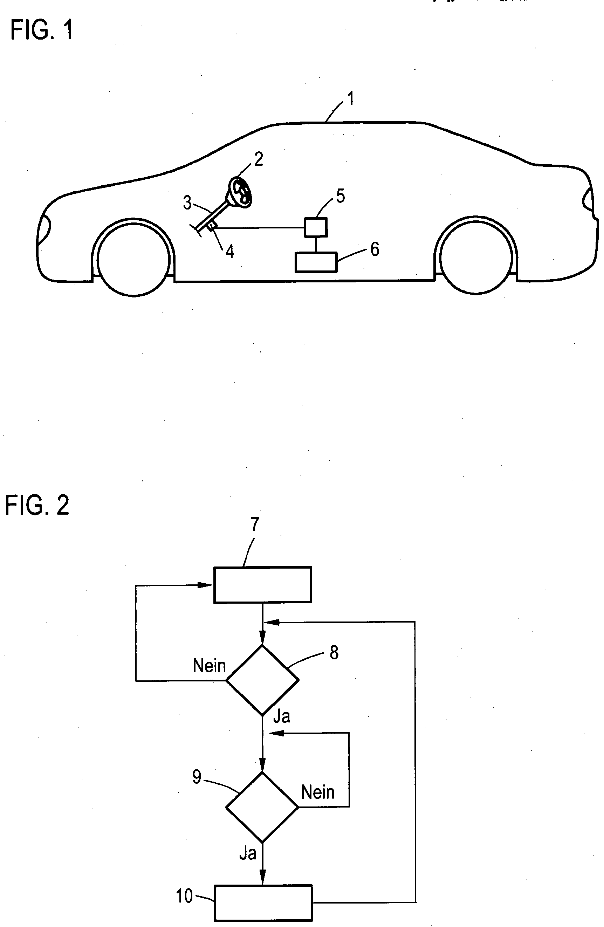

Fig. 1 zeigt ein Ausführungsbeispiel eines Kraftfahrzeugs 1 mit einer Vorrichtung zum Stabilisieren eines instabilen Fahrzustands. Das Kraftfahrzeug 1 umfasst ein Lenkrad 2, das mit einer Lenksäule 3 verbunden ist. An der Lenksäule 3 ist ein Aktor 4 angebracht, der dazu ausgebildet ist, ein Moment auf die Lenksäule 3 aufzubringen. Der Aktor wird durch eine Steuerungseinrichtung 5 angesteuert. Die Informationen, einen kritischen Fahrzustand betreffend, werden von einem ESP 6 der Steuerungseinrichtung 5 zugeführt.

Durchfährt der Fahrer eine Kurve mit zu hoher Geschwindigkeit, würde eine weitere Lenkbewegung in Kurvenrichtung ein Untersteuern verursachen. Die Informationen über diesen instabilen Fahrzustand werden vom ESP 6 der Steuerungseinrichtung 5 zugeführt. Da das Kraftfahrzeug einen weiteren Kurs mit einem größeren Radius als den vom Fahrer gewünschten Kurs fährt, wird der Fahrer durch einen größeren Lenkeinschlag versuchen, das Kraftfahrzeug auf den gewünschten Kurs zu bringen. Dadurch wird das Kraftfahrzeug jedoch noch weiter destabilisiert. Die Steuerungseinrichtung 5 steuert daher den Aktor 4 so, dass dieser eine Kraft auf die Lenksäule 3 und damit auf das Lenkrad 2 aufbringt. Diese Kraft verhindert, dass der Fahrer einen weiteren Lenkeinschlag in die falsche Richtung vornehmen kann, indem die Drehung in die entsprechende Richtung erschwert oder blockiert wird. Der Fahrer erhält dadurch eine haptische Rückmeldung und erkennt, dass sich das Kraftfahrzeug 1 am Rand der Haftgrenze befindet.

Lenkt der Fahrer das Kahrzeug in die entgegengesetzte Richtung, wird der Aktor 4 durch die Steuerungseinrichtung 5 so angesteuert, dass die Kraft auf die Lenksäule 3 und damit das Lenkrad 2 verringert wird und schließlich entfällt. Dadurch wird ein untersteuerter Fahrzustand verhindert und somit der Fahrzustand stabilisiert.

Fig. 2 zeigt eine schematische Darstellung des Verfahrens zur Stabilisierung eines erfassten instabilen Fahrzustands. Das Verfahren beginnt in Block 7, wonach in Block 8 abgefragt wird, ob ein instabiler Fahrzustand vorliegt oder nicht. Ist das Ergebnis "Nein", so wird wieder auf Block 7 verzweigt. Ist das Ergebnis "Ja", so wird dem Pfad zu Block 9 gefolgt. In Block 9 wird abgefragt, ob der Lenkeingriff des Fahrers zu einer Stabilisierung des Fahrzeugs führt. Diese Abfrage bzw. Prüfung wird durch die Steuerungseinrichtung 5 vorgenommen. Ist das Ergebnis "Nein", so wird wieder auf den Eingang von Block 9 verzweigt. In diesem Fall wird eine Lenkbewegung erschwert oder blockiert, damit eine weitere Destabilisierung des Fahrzustandes durch einen Lenkeingriff des Fahrers vermieden wird. Dazu steuert die Steuerungseinrichtung 5 den Aktor 4 entsprechend an. Ist das Ergebnis "Ja", so wird von Block 9 zu Block 10 verzweigt. In diese Drehrichtung ist das Lenkrad frei drehbar. In Block 10 erfolgt daher eine Stabilisierung des Fahrzustands. Nachdem der Fahrzustand stabilisiert wurde, wird wieder von Block 10 zu Block 8 verzweigt, so dass das Verfahren erneut durchlaufen wird.

## Patentansprüche

1. Verfahren zur Stabilisierung eines erfassten instabilen Fahrzustands eines Kraftfahrzeugs, (1)
wobei eine Kraft mittels eines Aktors (4) auf das Lenkrad (2) aufgebracht wird, die eine Drehung des Lenkrads in die Richtung,
die eine weitere Destabilisierung des Fahrzustands verursachen würde, erschwert,
**dadurch gekennzeichnet,**
**dass** das Lenkrad in die Drehrichtung, die eine weitere Destabilisierung des Fahrzustands des Kraftfahrzeugs bewirken würde, durch den Aktor blockiert wird.

2. Verfahren nach Anspruch 1,
**dadurch gekennzeichnet,**
**dass** das Kraftfahrzeug eine Steuerungseinrichtung (5) aufweist, die einen über- oder untersteuernden Fahrzustand erfasst und den Aktor ansteuert.

3. Verfahren nach Anspruch 1 oder 2,
**dadurch gekennzeichnet,**
**dass** im Falle einer Lenkbewegung in die Richtung, die zu einer Stabilisierung des Fahrzustands des Kraftfahrzeugs führt, die Steuerungseinrichtung (5) den Aktor (4) so steuert, dass die auf das Lenkrad aufgebrachte Kraft reduziert wird oder entfällt.

4. Verfahren nach einem der vorhergehenden Ansprüche,
**dadurch gekennzeichnet,**
**dass** zusätzlich zu der auf das Lenkrad (2) aufgebrachten Kraft ein optisches und/oder akustisches und/oder haptisches Signal ausgegeben wird.

5. Verfahren nach einem der vorangehenden Ansprüche,
**dadurch gekennzeichnet,**
**dass** die Steuerungseinrichtung (5) den Schwimmwinkel des Kraftfahrzeugs zur Erfassung des instabilen Fahrzustands verwendet.

6. Verfahren nach einem der vorangehenden Ansprüche,
**dadurch gekennzeichnet,**
**dass** der Steuerungseinrichtung (5) die einen instabilen Fahrzustand betreffenden Informationen, von einem elektronischen Stabilitätsprogramm (ESP), zugeführt werden.

7. Vorrichtung zum Stabilisieren eines instabilen Fahrzustands eines Kraftfahrzeugs (1), umfassend ein Mittel zum Erfassen eines instabilen Fahrzustandsund wenigstens eine Steuerungseinrichtung (5), die dazu ausgebildet ist, bei einem erfassten instabilen Fahrzustand, mittels eines Aktors (4) eine Kraft auf das Lenkrad (2) aufzubringen, welche eine Drehung des Lenkrads (2) in die Richtung, die eine weitere Destabilisierung des Kraftfahrzeugs (1) bewirken würde, erschwert,
**dadurch gekennzeichnet,**
**dass** der Aktor dazu ausgebildet ist, das Lenkrad in die Drehrichtung, die eine weitere Destabilisierung des Fahrzustands bewirken würde, zu blockieren.

8. Vorrichtung nach Anspruch 7,
**dadurch gekennzeichnet,**
**dass** die Steuerungseinrichtung (5) mit einem ESP (6) verbunden ist und dass einen instabilen Fahrzustand betreffende Informationen der Steuerungseinheit von dem ESP (6) zuführbar sind.

## Claims

1. Method for stabilising a detected unstable driving condition of a motor vehicle (1), wherein a force is applied to the steering wheel (2) by means of an actuator (4), which force makes it difficult to turn the steering wheel in a direction that would cause further destabilisation of the driving condition,
**characterised in that**
the steering wheel is blocked by the actuator from turning in a direction that would effect a further destabilisation of the driving condition of the motor vehicle.

2. Method according to claim 1,
**characterised in that**
the motor vehicle has a control device (5), which detects an understeering or oversteering driving condition and controls the actuator.

3. Method according to claim 1 or 2,
**characterised in that**
in the event of a steering movement in the direction that leads to a stabilisation of the driving condition of the motor vehicle, the control device (5) controls the actuator (4) such that the force applied to the steering wheel is reduced or eliminated.

4. Method according to any one of the preceding claims,
**characterised in that**
an optical and/or acoustic and/or haptic signal is emitted in addition to the force applied to the steering wheel (2).

5. Method according to any one of the preceding claims,
**characterised in that**,
the control device (5) uses the side slip angle of the motor vehicle to detect the unstable driving condition.

6. Method according to any one of the preceding claims,
**characterised in that**
information relating to an unstable driving condition is fed to the control device (5) by an electronic stability programme (ESP).

7. Device for stabilising an unstable driving condition of a motor vehicle (1) comprising means for detecting an unstable driving condition and at least one control device (5) which is designed to apply a force to the steering wheel (2) by means of an actuator (4) in the event of a detected unstable driving condition, which makes it difficult to turn the steering wheel (2) in a direction that would effect a further destabilisation of the motor vehicle (1),
**characterised in that**
the actuator is designed to block the steering wheel from turning in a direction that would effect a further destabilisation of the driving condition.

8. Device according to claim 7,
**characterised in that**
the control device (5) is connected to an ESP (6) and that information regarding an unstable driving condition can be fed to the control unit by the ESP (6).

## Revendications

1. Procédé pour stabiliser une situation de conduite instable détectée d'un véhicule automobile (1), une force étant appliquée sur le volant de direction (2) au moyen d'un actionneur (4), laquelle force rend difficile une rotation du volant de direction dans le sens qui provoquerait une poursuite de la déstabilisation de la situation de conduite,
**caractérisé en ce**
**que** le volant de direction est bloqué par l'actionneur dans le sens de rotation qui provoquerait une poursuite de la déstabilisation de la situation de conduite du véhicule automobile.

2. Procédé selon la revendication 1,
**caractérisé en ce**
**que** le véhicule automobile comporte un dispositif de commande (5), qui détecte une situation de conduite amorçant un survirage ou un sous-virage et qui pilote l'actionneur.

3. Procédé selon la revendication 1 ou 2,
**caractérisé en ce**
**que**, dans le cas d'un mouvement de direction dans le sens qui conduit à une stabilisation de la situation de conduite du véhicule automobile, le dispositif de commande (5) commande l'actionneur (4) de telle sorte que la force appliquée sur le volant de direction est réduite ou supprimée.

4. Procédé selon l'une quelconque des revendications précédentes,
**caractérisé en ce**
**que**, en plus de la force appliquée sur le volant de direction (2), un signal optique et/ou acoustique et/ou tactile est émis.

5. Procédé selon l'une quelconque des revendications précédentes,
**caractérisé en ce**
**que** le dispositif de commande (5) utilise l'angle de flottement du véhicule automobile pour détecter la situation de conduite instable.

6. Procédé selon l'une quelconque des revendications précédentes,
**caractérisé en ce**
**que** les informations concernant une situation de conduite instable sont envoyées au dispositif de commande (5) par un programme de stabilisation électronique (ESP).

7. Dispositif pour stabiliser une situation de conduite instable d'un véhicule automobile (1), comprenant un moyen pour détecter une situation de conduite instable et au moins un dispositif de commande (5) qui est réalisé pour, en présence d'une situation de conduite instable détectée, appliquer sur le volant de direction (2), au moyen d'un actionneur (4), une force qui rend difficile une rotation du volant de direction (2) dans le sens qui provoquerait une poursuite de la déstabilisation de la situation de conduite du véhicule automobile (1),
**caractérisé en ce**
**que** l'actionneur est réalisé pour bloquer le volant de direction dans le sens de rotation qui provoquerait une poursuite de la déstabilisation de la situation de conduite.

8. Dispositif selon la revendication 7,
**caractérisé en ce**
**que** le dispositif de commande (5) est relié à un programme de stabilisation électronique ESP (6), et en ce que des informations concernant une situation de conduite instable peuvent être envoyées à l'unité de commande par le programme de stabilisation électronique ESP (6).
